(19) Europäisches Patentamt
European Patent Office
Office européen des brevets

(11) **EP 3 698 223 B1**

(12) **EUROPÄISCHE PATENTSCHRIFT**

(45) Veröffentlichungstag und Bekanntmachung des Hinweises auf die Patenterteilung:
**04.05.2022   Patentblatt 2022/18**

(21) Anmeldenummer: **18755774.9**

(22) Anmeldetag: **10.08.2018**

(51) Internationale Patentklassifikation (IPC):
**G05B 13/02** *(2006.01)*      **G05B 13/04** *(2006.01)*
**G06F 17/11** *(2006.01)*

(52) Gemeinsame Patentklassifikation (CPC):
**G05B 13/021; G05B 13/041; G06F 17/11**

(86) Internationale Anmeldenummer:
**PCT/EP2018/071753**

(87) Internationale Veröffentlichungsnummer:
**WO 2019/076512 (25.04.2019 Gazette 2019/17)**

(54) **VERFAHREN UND VORRICHTUNG ZUM BETREIBEN EINES AKTORREGELUNGSSYSTEMS, COMPUTERPROGRAMM UND MASCHINENLESBARES SPEICHERMEDIUM**

METHOD AND DEVICE FOR OPERATING AN ACTUATOR REGULATION SYSTEM, COMPUTER PROGRAM, AND MACHINE-READABLE STORAGE MEDIUM

PROCÉDÉ ET DISPOSITIF POUR FAIRE FONCTIONNER UN SYSTÈME DE RÉGULATION D'ACTIONNEUR, PROGRAMME D'ORDINATEUR ET SUPPORT DE STOCKAGE LISIBLE PAR MACHINE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.10.2017   DE 102017218811**

(43) Veröffentlichungstag der Anmeldung:
**26.08.2020   Patentblatt 2020/35**

(73) Patentinhaber:
• **Robert Bosch GmbH**
  **70442 Stuttgart (DE)**
• **Technische Universität Darmstadt**
  **64289 Darmstadt (DE)**

(72) Erfinder:
• **BISCHOFF, Bastian**
  **73734 Esslingen (DE)**
• **VINOGRADSKA, Julia**
  **70469 Stuttgart (DE)**
• **PETERS, Jan**
  **64342 Seeheim-Jugenheim (OT Malchen) (DE)**

(74) Vertreter: **Banse & Steglich**
  **Patentanwälte PartmbB**
  **Patentanwaltskanzlei**
  **Herzog-Heinrich-Straße 23**
  **80336 München (DE)**

(56) Entgegenhaltungen:
**EP-A2- 2 112 569      WO-A1-2016/198588
US-B1- 6 208 981**

**Beschreibung**

Die Erfindung betrifft ein Verfahren zum Betreiben eines Aktorregelungssystems, ein Lernsystem, das Aktorregelungssystem, ein Computerprogramm zum Ausführen des Verfahrens und ein maschinenlesbares Speichermedium auf dem das Computerprogramm gespeichert ist.

Stand der Technik

Aus der nicht vorveröffentlichten DE 10 2017 211 209 ist ein Verfahren zum Verfahren zum automatischen Einstellen mindestens eines Parameters eines Aktorregelungssystems bekannt, welches zum Regeln einer Regelungsgröße eines Aktors auf eine vorgebbare Sollgröße eingerichtet ist, wobei das Aktorregelungssystem eingerichtet ist, abhängig von dem mindestens einen Parameter, der Sollgröße und der Regelungsgröße eine Stellgröße zu generieren und abhängig von dieser Stellgröße den Aktor anzusteuern,

wobei ein neuer Wert des mindestens einen Parameters abhängig von einer Langzeit-Kostenfunktion gewählt wird, wobei diese Langzeit-Kostenfunktion abhängig von einer prädizierten zeitlichen Evolution einer Wahrscheinlichkeitsverteilung der Regelungsgröße des Aktors ermittelt wird und der Parameter dann auf diesen neuen Wert gesetzt wird.

Die Druckschrift EP 2 112 569 A2 offenbart ein Verfahren zum Lernen einer Regelung eines technischen Systems, wobei der Betrieb des technischen Systems charakterisiert ist durch Zustände, die das technische System im Betrieb einnehmen kann, und Aktionen, welche während des Betriebs des technischen Systems ausgeführt werden und einen jeweiligen Zustand des technischen Systems in einen Folgezustand überführen. Beim Lernen der Regelung des technischen Systems wird die statistische Unsicherheit der beim Lernen verwendeten Trainingsdaten geeignet berücksichtigt, indem die statistische Unsicherheit eine Qualitätsfunktion, die einen Optimalbetrieb des technischen Systems modelliert, mittels einer Unsicherheitspropagation bestimmt wird und beim Lernen einer Aktionsauswahlregel einfließt. Durch einen entsprechend wählbaren Sicherheitsparameter kann das Lernverfahren an verschiedene Anwendungsszenarien, die sich in ihrer statistischen Anforderung unterscheiden, angepasst werden. Weiterhin verweist diese Druckschrift auf die Anwendung einer Value-Funktion (Wertfunktion) und einer optimalen Qualitätsfunktion, die als Lösung einer Bellman-Optimalitäts-Gleichung bestimmt wird.

Die Druckschrift US 6,208,981 B1 offenbart eine Schaltungsanordnung zum Steuern einer Einrichtung in einem Kraftfahrzeug, mit einem Fuzzy-System, in dem Sensorsignale ausgewertet und Stellsignale für die Einrichtung erzeugt werden.

Vorteil der Erfindung

Das Verfahren mit den Merkmalen des unabhängigen Anspruchs 1 hat demgegenüber insbesondere den Vorteil, dass eine optimale Regelung eines Aktorregelungssystems gewährleistet werden kann. Vorteilhafte Weiterbildungen sind Gegenstand der abhängigen Ansprüche.

Offenbarung der Erfindung

In einem ersten Aspekt betrifft die Erfindung ein Verfahren zum Betreiben eines Lernsystems zum Darstellen von einer eine Regelungsstrategie eines Aktorregelungssystems charakterisierenden Größe, welches zum Regeln einer Regelungsgröße eines Aktors auf eine vorgebbare Sollgröße eingerichtet ist, wobei das Aktorregelungssystem eingerichtet ist, abhängig von einer eine Regelungsstrategiecharakterisierenden Größe, insbesondere auch abhängig von der Sollgröße und/oder der Regelungsgröße, eine Stellgröße zu generieren und abhängig von dieser Stellgröße den Aktor anzusteuern, wobei die die Regelungsstrategie charakterisierende Größe abhängig von einer Wert -Funktion (Englisch: *value function*) ermittelt wird.

Weiterhin ist vorgesehen, dass die Wert -Funktion iterativ ermittelt wird, indem die Wert -Funktion mittels der Bellmann-Gleichung durch sukzessive Iterationen einer iterierten Wert -Funktion schrittweise angenähert wird, wobei mittels der Bellmann-Gleichung aus einer iterierten Wert -Funktion einer vorhergehenden Iteration eine iterierte Wert -Funktion einer nachfolgenden Iteration ermittelt wird, wobei zur Lösung der Bellmann-Gleichung an Stelle der iterierten Wert-Funktion der vorhergehenden Iteration nur ihre Projektion auf einen von einem Satz von Basisfunktionen aufgespannten linearen Funktionenraum verwendet wird.

Durch das Ermitteln der Wert -Funktion ist es möglich, eine optimale Regelung des Aktorregelungssystems zu gewährleisten, sogar in Fällen in denen die Zustandsgrößen und/oder die Aktionen nicht auf diskrete Werte beschränkt sind, sondern kontinuierliche Werte annehmen können.

Die Regelungsstrategie kann insbesondere so ermittelt werden, dass zu jeder Regelungsgröße diejenige Aktion, aus der die Stellgröße abgeleitet wird, ermittelt wird, die die Wert -Funktion maximiert.

Hierdurch lässt sich insbesondere sicherstellen, dass die iterativ ermittelte Wert-Funktion eine vorgebbare Belohnung (Englisch: *reward*) insbesondere auf lange Sicht und unter Berücksichtigung der Systemdynamik maximiert. Durch die Verwendung der Projektionen ist es möglich, die Bellmann-Gleichung, die wegen einer in ihr enthaltenen Maximalwertbildung nur punktweise analytisch lösbar ist, besonders einfach näherungsweise zu lösen.

Besonders vorteilhaft ist es, wenn auch an Stelle der iterierten Wert-Funktion der nachfolgenden Iteration nur ihre Projektion auf einen von einem zweiten Satz von Basisfunktionen aufgespannten Funktionenraum ermittelt wird.

Somit ist es möglich, diese Projektion zu ermitteln, ohne die iterierte Wert-Funktion der nachfolgenden Iteration selber vollständig berechnen zu müssen.

Besonders einfach analytisch lösbare Integrale der Bellmann-Gleichung ergeben sich dann, wenn als Basisfunktionen Gauß-Funktionen verwendet werden. Damit wird das Verfahren numerisch besonders effizient.

Wegen der Maximalwertbildung der Bellmann-Gleichung lässt sie sich im Allgemeinen nur an einzelnen Punkten auswerten. Eine vollständige Lösung ist dennoch möglich, wenn das Integral in der Bellmann-Gleichung mittels numerischer Quadratur berechnet wird. Daher ist die Verwendung numerischer Quadratur numerisch besonders effizient.

In einem weiteren Aspekt der Erfindung ist vorgesehen, wenn ein nachfolgender Satz von Basisfunktionen iterativ ermittelt wird, indem dem Satz abhängig davon mindestens eine weitere Basisfunktion hinzugefügt wird, wie groß ein maximales Residuum zwischen der iterierten Wert-Funktion und ihrer Projektion auf den von diesem Satz aufgespannten Funktionsraum ist.

Durch dieses iterative Vorgehen lässt sich besonders effizient ein numerischer Fehler des Verfahrens auf einen vorgebbaren Maximalwert begrenzen und somit das Aktorregelungssystem besonders zuverlässig betreiben.

In einer Weiterbildung kann vorgesehen sein, dass die mindestens eine weitere Basisfunktion abhängig von einer Maximalstelle der Regelungsgröße gewählt wird, bei dem das Residuum maximal wird.

Hiermit wird das Verfahren besonders effizient, da ein numerischer Fehler, der sich durch die Projektion auf den von dem Satz von Basisfunktionen aufgespannten Funktionenraum besonders schnell reduzieren lässt.

Die Effizienz ist besonders hoch, wenn hierbei die mindestens eine weitere Basisfunktion an Maximalstelle ihren Maximalwert annimmt.

Alternativ oder zusätzlich erhöht es die Effizienz des Verfahrens weiter, wenn die mindestens eine weitere Basisfunktion abhängig von einer eine Krümmung des Residuums an der Maximalstelle charakterisierenden Größe, insbesondere der Hesse-Matrix des Residuums an der Maximalstelle, gewählt wird.

Besonders einfach ist es insbesondere im Fall mehrdimensionaler Regelungsgrö-ßen, wenn die mindestens eine weitere Basisfunktion derart gewählt wird, dass an der Maximalstelle ihre Hesse-Matrix gleich der Hesse-Matrix des Residuums ist.

In einem weiteren Aspekt der Erfindung kann vorgesehen sein, dass eine bedingte Wahrscheinlichkeit von der die Bellmann-Gleichung abhängig ist, mittels eines Modells des Aktors ermittelt wird. Auch hiermit wird das Verfahren besonders effizient, da ein wirkliches Verhalten des Aktors nicht erneut ermittelt werden muss.

Hierbei ist es besonders vorteilhaft, wenn das Modell ein Gaußprozess ist. Dies ist insbesondere dann besonders vorteilhaft, wenn die Basisfunktionen durch Gauß-Funktionen gegeben sind, da sich die auftretenden Integrale dann als Integrale über Produkte von Gauß-Funktionen analytisch lösen lassen, was eine besonders effiziente Implementierung ermöglicht.

Um ein besonders gutes Regelverhalten des Aktorregelungssystems zu erhalten, kann gemäß eines weiteren Aspekts der Erfindung vorgesehen sein, dass das Anlernen des Aktorregelungssystems und das Anlernen des Modells in einem episodenhaften Vorgehen ermittelt wird, dass also nach erfolgter Ermittlung der die Regelungsstrategie charakterisierenden Größe das Modell abhängig von der Stellgröße, die bei einer Regelung des Aktors mit dem Aktorregelungssystem unter Berücksichtigung der Regelungsstrategie dem Aktor zugeführt wird, und der dann resultierenden Regelungsgröße angepasst wird, wobei nach erfolgter Anpassung des Modells die die Regelungsstrategie charakterisierende Größe erneut mit dem oben beschriebenen Verfahren ermittelt wird, wobei dann die bedingte Wahrscheinlichkeit mittels des nun angepassten Modells ermittelt wird.

In einem weiteren Aspekt betrifft die Erfindung ein Lernsystem zum automatischen Einstellen einer eine Regelungsstrategie eines Aktorregelungssystems charakterisierenden Größe, welches zum Regeln einer Regelungsgröße eines Aktors auf eine vorgebbare Sollgröße eingerichtet ist, wobei das Lernsystem eingerichtet ist, eines der vorgenannten Verfahren auszuführen.

In einem weiteren Aspekt betrifft die Erfindung ein Verfahren, bei dem die Regelungsstrategie charakterisierende Größe nach einem der vorgenannten Verfahren ermittelt wird und dann abhängig von der die Regelungsstrategie charakterisierenden Größe die Stellgröße generiert wird und abhängig von dieser Stellgröße der Aktor angesteuert wird.

In einem noch weiteren Aspekt betrifft die Erfindung ein Computerprogramm, das eingerichtet ist, eines der vorgenannten Verfahren auszuführen. D.h. das Computerprogramm umfasst Anweisungen, die, wenn sie auf einem Computer ausgeführt werden, diesen Computer veranlassen, das Verfahren auszuführen.

Ferner betrifft die Erfindung ein maschinenlesbares Speichermedium, auf dem dieses Computerprogramm gespeichert ist.

Nachfolgend werden Ausführungsformen der Erfindung unter Bezugnahme auf die beiliegenden Zeichnungen näher erläutert. In den Zeichnungen zeigen:

Figur 1      schematisch eine Interaktion zwischen Lernsystem und Aktor;

Figur 2      schematisch eine Interaktion zwischen Aktorregelungssystem und Aktor;

Figur 3      in einem Flussdiagramm eine Ausführungsform des Verfahrens zum Trainieren des Aktorregelungssystems;

Figur 4      in einem Flussdiagramm eine Ausführungsform eines Verfahrens zum Ermitteln von iterierten Wert-Funktionen;

Figur 5      in einem Flussdiagramm eine Ausführungsform eines Verfahrens zum Ermitteln eines Satzes von Basisfunktionen;

Figur 6      in Flussdiagrammen Ausführungsformen von Verfahren zum Ermitteln der Stellgröße.

Beschreibung der Ausführungsbeispiele

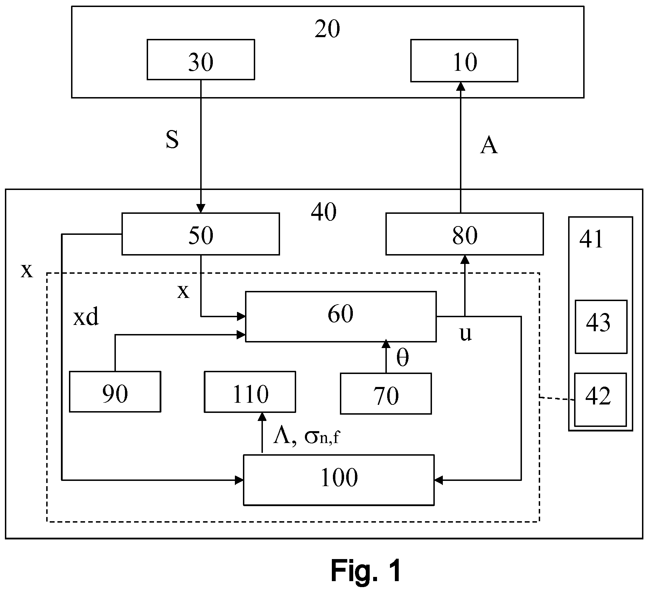

Figur 1 zeigt den Aktor 10 in seiner Umgebung 20 in Interaktion mit dem Lernsystem 40. Aktor 10 und Umgebung 20 werden gemeinschaftlich nachfolgend auch als Aktorsystem bezeichnet. Ein Zustand des Aktorsystems wird mit einem Sensor 30 erfasst, der auch durch eine Mehrzahl von Sensoren gegeben sein kann. Ein Ausgangssignal S des Sensors 30 wird an das Lernsystem 40 übermittelt.

Das Lernsystem 40 ermittelt hieraus ein Ansteuersignal A, welches der Aktor 10 empfängt.

Bei dem Aktor 10 kann es sich beispielsweise um einen (teil-)autonomen Roboter, beispielsweise ein (teil-)autonomes Kraftfahrzeug einen (teil-) autonomen Rasenmäher handeln. Es kann sich auch um eine Aktuierung eines Stellglieds eines Kraftfahrzeugs handeln, beispielsweise um eine Drosselklappe oder um einen Bypass-Steller für eine Leerlaufregelung. Es kann sich auch um eine Heizungsanlage oder einen Teil der Heizungsanlage handeln, wie etwa einen Ventilsteller. Bei dem Aktor 10 kann es sich insbesondere auch um größere Systeme handeln, wie beispielsweise einen Verbrennungsmotor oder einen (ggf. hybridisierten) Antriebsstrang eines Kraftfahrzeugs oder auch um ein Bremssystem.

Bei dem Sensor 30 kann es sich beispielsweise um einen oder mehrere Videosensoren und/oder einen oder mehrere Radarsensoren und/oder einen oder mehrere Ultraschallsensoren und/oder einen oder mehrere Positionssensoren (beispielsweise GPS) handeln. Auch andere Sensoren sind denkbar, beispielsweise ein Temperatursensor.

In einem anderen Ausführungsbeispiel kann es sich bei dem Aktor 10 um einen Fertigungsroboter handeln, und bei dem Sensor 30 dann beispielsweise um einen optischen Sensor handeln, der Eigenschaften von Fertigungserzeugnissen des Fertigungsroboters erfasst.

Das Lernsystem 40 empfängt das Ausgangssignal S des Sensors 30 in einer optionalen Empfangseinheit 50, die das Ausgangssignal S in eine Regelungsgröße x umwandelt (alternativ kann auch unmittelbar das Ausgangssignal S als Regelungsgröße x übernommen werden). Die Regelungsgröße x kann beispielsweise ein Ausschnitt oder eine Weiterverarbeitung des Ausgangssignals S sein. Die Regelungsgröße x wird einem Regler 60 zugeführt. In dem Regler kann entweder eine Regelungsstrategie $\pi$ implementiert sein, oder eine Wert-Funktion V*.

In einem Parameterspeicher 70 sind Parameter $\theta$ hinterlegt, die dem Regler 60 zugeführt werden. Die Parameter $\theta$ parametrieren die Regelungsstrategie $\pi$ bzw. die Wert-Funktion V*. Bei den Parametern $\theta$ kann es sich um eine Einzahl oder Mehrzahl von Parametern handeln.

Ein Block 90 führt dem Regler 60 die vorgebbare Sollgröße xd zu. Es kann vorgesehen sein, dass der Block 90 die vorgebbare Sollgröße xd generiert, beispielsweise abhängig von einem Sensorsignal, dass dem Block 90 vorgegeben wird. Es ist auch möglich, dass Block 90 die Sollgröße xd aus einem dedizierten Speicherbereich ausliest, in dem sie abgelegt ist.

Abhängig von der Regelungsstrategie $\pi$ bzw. der Wert -Funktion V*, von der Sollgröße xd und der Regelungsgröße x generiert der Regler 60 eine Stellgröße u. Diese kann beispielsweise abhängig von einer Differenz x-xd zwischen Regelungsgröße x und Sollgröße xd ermittelt werden.

Der Regler 60 übermittelt die Stellgröße u an eine Ausgabeeinheit 80, die hieraus das Ansteuersignal A ermittelt. Beispielsweise ist es möglich, dass die Ausgabeeinheit zunächst überprüft, ob die Stellgröße u in einem vorgebbaren Wertebereich liegt. Ist dies der Fall, wird abhängig von der Stellgröße u das Ansteuersignal A ermittelt, beispielsweise, indem abhängig von der Stellgröße u ein zugeordnetes Ansteuersignal A aus einem Kennfeld ausgelesen wird. Dies ist der Normalfall. Wird hingegen ermittelt, dass die Stellgröße u nicht in dem vorgebbaren Wertebereich liegt, so kann vorgesehen sein, dass das Ansteuersignal A derart ausgebildet ist, dass es bewirkt, den Aktor A in einen abgesicherten Modus zu überführen.

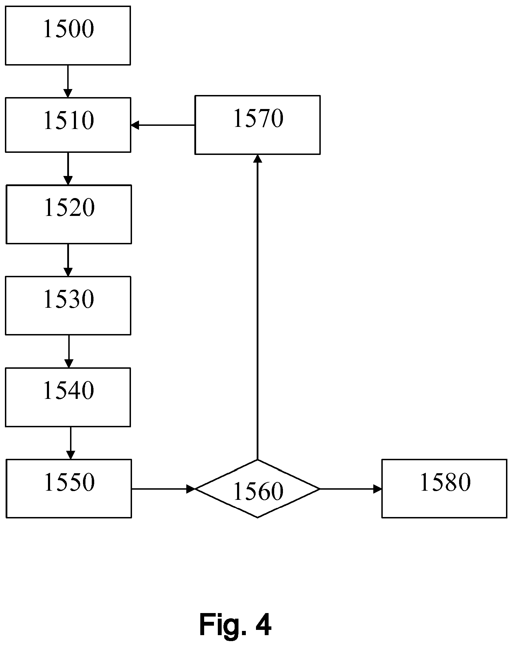

Empfangseinheit 50 übermittelt die Regelungsgröße x an einen Block 100. Ebenso übermittelt Regler 60 die korrespondierende Stellgröße u an den Block 100. Block 100 speichert die Zeitreihen der an einer Folge von Zeitpunkten empfangenen Regelungsgröße x und der jeweils korrespondierenden Stellgröße u. Block 100 kann dann abhängig von diesen Zeitreihen Modellparameter A, $\sigma_\eta$, $\sigma_f$ des Modells g anpassen. Die Modellparameter A, $\sigma_\eta$, $\sigma_f$ werden einem Block 110 zugeführt, der sie beispielsweise an einer dedizierten Speicherstelle speichert. Dies wird weiter unten in Figur 4, Schritt 1010 näher beschrieben.

Das Lernsystem 40 umfasst in einer Ausführungsform einen Computer 41 mit einem maschinenlesbaren Speichermedium 42, auf dem ein Computerprogramm gespeichert ist, dass, wenn es vom Computer 41 ausgeführt wird, diesen veranlasst, die beschriebenen Funktionalitäten des Lernsystems 40 auszuführen. Der Computer 41 umfasst im Ausführungsbeispiel eine GPU 43.

Das Modell g kann zum Ermitteln der Wert -Funktion V* verwendet werden. Dies wird im Folgenden ausgeführt.

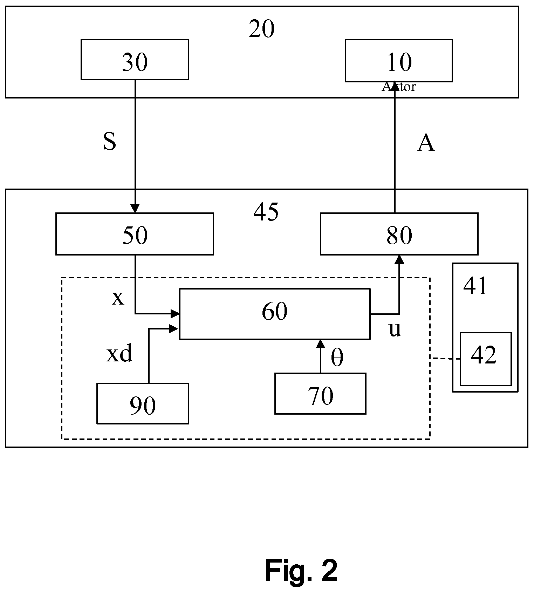

Figur 2 illustriert das Zusammenspiel des Aktorregelungssystems 45 mit dem Aktor 10. Der Aufbau des Aktorregelungssystems 45 und seine Interaktion mit Aktor 10 und Sensor 30 gleicht in weiten Teilen dem Aufbau des Lernsystems 40, weshalb hier nur die Unterschiede beschrieben werden. Im Gegensatz zum Lernsystem 40 weist das Aktorregelungssystem 45 keinen Block 100 und auch keinen Block 110 auf. Die Übermittelung von Größen an den Block 100 entfällt daher. Im Parameterspeicher 70 des Aktorregelungssystems 45 sind Parameter $\theta$ hinterlegt, die mit dem erfindungsgemäßen Verfahren, beispielsweise wie in Figur 4 illustriert, ermittelt wurden.

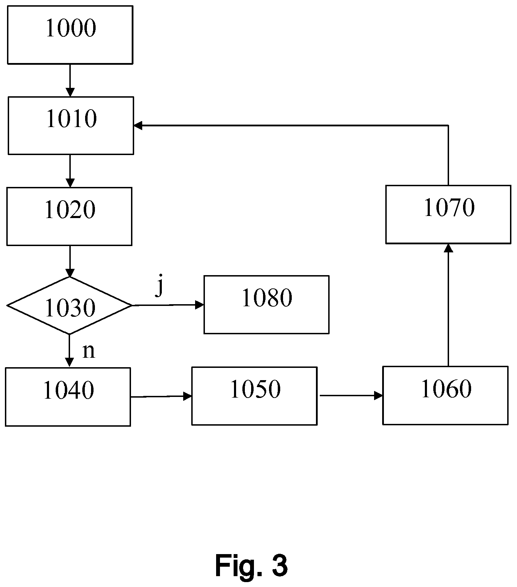

Figur 3 illustriert eine Ausführungsform des erfindungsgemäßen Verfahrens. Zunächst (1000) wird ein initialer Wert $x_0$ der Regelungsgröße x aus einer vorgebbaren initialen Wahrscheinlichkeitsverteilung $p(x_0)$ ausgewählt. Ein Episodenindex e wird auf den Wert e=1 initialisiert, eine diesem Episodenindex e zugeordnete Wert -Funktion $\hat{V}_e$ wird auf den Wert $\hat{V}^e = 0$ initialisiert.

Außerdem werden zufällig Stellgrößen $u_0$, $u_1$, ..., $u_{T-1}$ bis zu einem vorgebbaren Zeithorizont T zufällig ausgewählt mit denen wie in Figur 1 beschrieben der Aktor 10 angesteuert wird. Der Aktor 10 interagiert über die Umwelt 20 mit dem Sensor 30, dessen Sensorsignal S als Regelungsgröße $x_1$, ..., $x_{T-1}$, $x_T$ mittelbar oder unmittelbar vom Regler 60 empfangen wird.

Diese werden zu einem Datensatz $D = \{(x_0, u_0, x_1), ..., (x_{T-1}, u_{T-1}, x_T)\}$ zusammengefasst.

Block 100 und aggregiert (1030) die Zeitreihen von Stellgröße u und Regelungsgröße x die gemeinsam jeweils ein Paar z aus Regelungsgröße x und Stellgröße u ergeben, $z_t = (x_t^1, ..., x_t^D, u_t^1 ... u_t^F)^T$ .

D ist hierbei die Dimensionalität der Regelungsgröße x und F die Dimensionalität der Stellgröße u, d.h. $x \in \mathbb{R}^D$ , $u \in \mathbb{R}^F$ .

Abhängig von dieser Zustandstrajektorie wird dann ein Gauß-Prozess g derart angepasst, dass zwischen aufeinander folgenden Zeitpunkten t, t+1 gilt

$$x_{t+1} = x_t + g(x_t, u_t). \qquad (1)$$

Hierbei ist

$$u_t = \pi_\theta(x_t). \qquad (1')$$

Eine Kovarianzfunktion k des Gauß-Prozesses g ist beispielsweise gegeben durch

$$k(z, w) = \sigma_f^2 \exp\left(-\frac{1}{2}(z-w)^T \Lambda^{-1} (z-w)\right) . \qquad (2)$$

Parameter $\sigma_f^2$ ist hierbei eine Signalvarianz, $\Lambda = diag(l_1^2 ... l_{D+F}^2)$ ist eine Sammlung quadrierter Längenskalen $l_1^2 ... l_{D+F}^2$ für jede der D+F Eingangsdimensionen.

Eine Kovarianzmatrix K ist definiert durch

$$K(Z,Z)_{i,j} = k(z^i, z^j) . \qquad (3)$$

Der Gauß-Prozess g ist dann charakterisiert durch zwei Funktionen: Durch einen Mittelwert $\mu$ und eine Varianz

Var, die gegeben sind durch

$$\mu(z_*) = k(z_*, Z)(K(Z,Z) + \sigma_n^2 I)^{-1} y, \qquad (4)$$

$$Var(z_*) = k(z_*, z_*) - k(z_*, Z)(K(Z,Z) + \sigma_n^2 I)^{-1} k(Z, z_*). \qquad (5)$$

y ist hierbei in üblicher Weise gegeben durch $y^i = f(z^i) + \epsilon^i$, mit weißem Rauschen $\epsilon^i$.

Die Parameter $\Lambda$, $\sigma_n$, $\sigma_f$ werden dann an die Paare $(z^i, y^i)$ in bekannter Weise angepasst, indem eine logarithmierte *marginal likelihood*-Funktion maximiert wird.

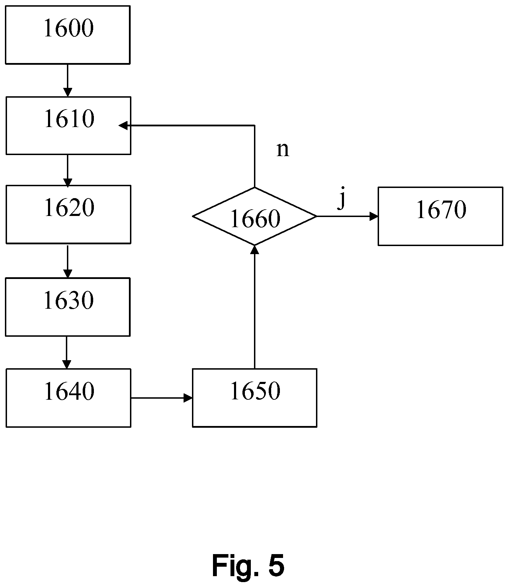

Anschließend (1020) werden dem Episodenindex e zugeordnete iterierte Wert-Funktionen $\hat{V}_e{}^1$, $\hat{V}_e{}^2$, ... $\hat{V}_e{}^*$ ermittelt, wobei die letzte dieser iterierten Wert-Funktionen eine konvergierte dem Episodenindex e zugeordnete iterierte Wert-Funktion $\hat{V}_e{}^*$ ist. Eine Ausführungsform des Verfahrens zur Ermittlung der dem Episodenindex e zugeordnete iterierte Wert-Funktionen $\hat{V}_e{}^1$, $\hat{V}_e{}^2$, ... $\hat{V}_e{}^*$ ist in Figur 5 illustriert.

Dann (1030) wird überprüft, ob die konvergierte dem Episodenindex e zugeordnete iterierte Wert-Funktion $\hat{V}_e{}^*$ konvergiert ist, beispielsweise, indem geprüft wird, ob die konvergierten dem aktuellen Episodenindex e und die dem vorherigen Episodenindex e-1 zugeordneten iterierten Wert-Funktionen $\hat{V}_e{}^*$, $\hat{V}_{e-1}^*$ sich um weniger als einen ersten vorgebbaren Grenzwert $\Delta_1$ unterscheiden, also $\|\hat{V}_e{}^* - \hat{V}_{e-1}^*\| < \Delta_1$. Ist dies der Fall, folgt Schritt 1080.

Ist die Konvergenz hingegen noch nicht erreicht (1040) wird eine dem Episodenindex e zugeordnete optimale Regelungsstrategie $\pi_e$ definiert durch

$$\pi_e(x) = \mathrm{argmax}_u \int p(x'|x,u)\hat{V}_e{}^*(x')dx'. \qquad (6)$$

Anschließend (1050) wird erneut der initiale Wert $x_0$ der Regelungsgröße x aus der initialen Wahrscheinlichkeitsverteilung $p(x_0)$ ausgewählt.

Mittels der in Formel (6) definierten optimalen Regelungsstrategie $\pi_e$ wird nun (1060) iterativ eine Folge von Regelungsgrößen $\pi_e(x_0)$, ..., $\pi_e(x_{T-1})$ ermittelt, mit denen der Aktor 10 angesteuert wird. Aus den dann empfangenen Ausgangssignalen S des Sensors 30 werden dann jeweils sich dann ergebende Zustandsgrößen $x_1, ..., x_T$ ermittelt.

Nun (1070) wird der Episodenindex e um eins inkrementiert, und es wird zurückverzweigt zu Schritt 1030.

Wurde in Schritt 1030 entschieden, dass die Iteration über Episoden zu einer Konvergenz der dem Episodenindex e zugeordneten iterierte Wert-Funktionen $\hat{V}_e{}^*$ geführt hat, wird die Wert-Funktion $V^*$ gleich der der dem Episodenindex e zugeordneten iterierte Wert-Funktionen $\hat{V}_e{}^*$ gesetzt. Damit endet dieser Aspekt des Verfahrens.

Figur 4 illustriert eine Ausführungsform des Verfahrens zum Ermitteln der dem Episodenindex e zugeordneten iterierten Wert-Funktionen $\hat{V}_e{}^1$, $\hat{V}_e{}^2$, ... $\hat{V}_e{}^*$. Aus Gründen der Übersichtlichkeit wird der Episodenindex e im Folgenden weggelassen. Der Superskript-Index wird im Folgenden mit dem Buchstaben *t* bezeichnet. Das Verfahren berechnet stets eine nachfolgende iterierte Wert-Funktion $\hat{V}^{t+1}$ stets auf Basis der vorhergehenden Wert-Funktion $\hat{V}^t$. Diese vorhergehende iterierte Wert-Funktion $\hat{V}^t$ ist als Linearkombination $\hat{V}^t = \sum_{i=1}^{N_t} \alpha_i^t \cdot \phi_i^t$ mit Basisfunktionen $\{\phi_i^t\}_{i \leq N_t}$ und Koeffizienten $\{\alpha_i^t\}_{i \leq N_t}$ gegeben. Diese Koeffizienten $\{\alpha_i^t\}_{i \leq N_t}$ werden auch kurz in einem Koeffzientenvektor $\alpha^t$ zusammengefasst. Das Verfahren startet (1500) mit dem Index $t = 0$.

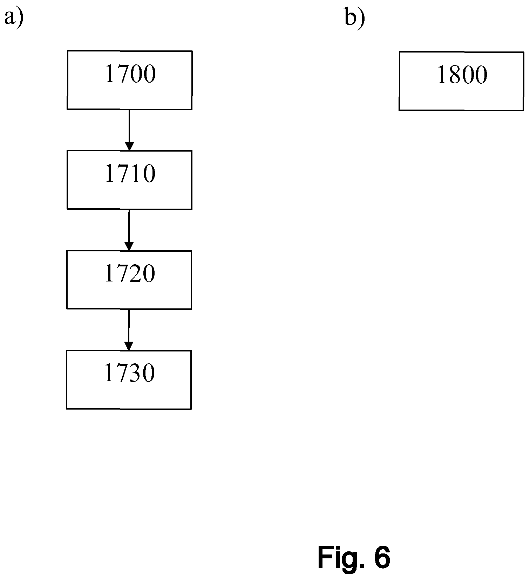

Zunächst wird ein Satz B von Basisfunktionen $\{\phi_i^{t+1}\}_{i \leq N_{t+1}}$ ermittelt (1510). Diese können entweder fest vorgegeben sein, oder sie können mit dem in Figur 6 illustrierten Algorithmus ermittelt werden.

Dann (1520) werden Skalarprodukte $M_{ij} = \langle \phi_i^{t+1} | \phi_j^{t+1} \rangle_{L^2}$ für $i,j = 1 ... N_{t+1}$ ermittelt.

Anschließend (1530) werden mittels numerischer Quadratur Stützstellen $\xi_1, ..., \xi_K$ und zugehörige Stützgewichte $w_1, ..., w_K$ definiert.

Mit Hilfe dieser Stützstellen $\xi_1, ..., \xi_K$ und Stützgewichte $w_1, ..., w_K$ werden dann (1540) für alle Indizes $i = 1 ... N_{t+1}$ Koeffizienten $b_i^{t+1}$ eines Vektors $b^{t+1}$ ermittelt zu

$$b_i^{t+1} = \sum_{k=1}^{K} w_k \phi_i^{t+1}(\xi_k) A\widehat{V}^t(\xi_k). \qquad (7)$$

Ein Koeffizientenvektor $\alpha^{t+1}$ wird nun (1550) ermitelt zu $\alpha^{t+1} = M^{-1}b^{t+1}$, wobei eine Massematrix M gegeben ist durch $M = (M_{ij})_{i,j \le N_t+1}$.

Der Operator A ist definiert als

$$A\widehat{V}^t(x) = \max_u \int \left( p(x'|x,u) \cdot \left( r(x') + \gamma \widehat{V}^t(x') \right) \right) dx'. \quad (8)$$

Hierbei ist $0 < \gamma < 1$ ein vorgebbarer Gewichtungsfaktor, z.B: $\gamma = 0{,}85$. r ist eine Belohnungsfunktion (Englisch: *reward function*), die einem Wert der Regelungsgröße x einen Belohnungswert zuordnet. Vorteilhafterweise ist Belohnungsfunktion r so gewählt, dass sie umso größere Werte annimmt, je kleiner eine Abweichung der Regelungsgröße x von der Sollgröße xd ist.

Die bedingte Wahrscheinlichkeit $p(x'|x,u)$ der Regelungsgröße x' gegeben die vorherige Regelungsgröße x und die Stellgröße u kann in Formel (8) mittels des Gaußprozesses g ermittelt werden.

Es sei angemerkt, dass der max-Operator in Formel (8) einer analytischen Lösung nicht zugänglich ist. Allerdings kann für gegebene Regelungsgröße x die Maximierung jeweils durch ein Gradientenaufstiegsverfahren erfolgen.

Mit diesen Definitionen ist sichergestellt, dass die so definierte nachfolgende iterierte Wert-Funktion $\widehat{V}^{t+1} = \sum_{i=1}^{N_{t+1}} \alpha_i^{t+1} \cdot \phi_i^{t+1}$ einer Projektion einer tatsächlichen iterierten Wert-Funktion $V^{t+1}$ auf den von den Basisfunktionen B aufgespannten Raum entspricht, wobei die tatsächlichen iterierten Wert-Funktionen die Bellmann-Gleichung

$$V^{t+1}(s) = \max_u \int \left( p(x'|x,u) \cdot (r(x') + \gamma V^t(x')) \right) dx' \quad (9)$$

erfüllen.

Der Vektor $b^{t+1}$ erfüllt also näherungsweise die Gleichung $b_i^{t+1} = \left\langle \phi_i^{t+1} \middle| V^{t+1} \right\rangle_{L^2}$, wobei erkannt wurde, dass diese Gleichung, die exakt nur in Ausnahmefällen lösbar ist, gelöst werden kann, wenn sowohl die tatsächliche Wert-Funktion $V^{t+1}$ durch ihre Projektion auf den von den Basisfunktionen B aufgespannten Raum ersetzt wird, also durch die iterierte Wert-Funktion $\widehat{V}^{t+1}$, und die enstehende Integralgleichung mit numerischer Quadratur approximiert gelöst wird.

Nun (1560) wird überprüft, ob ein Abbruchkriterium erfüllt ist. Das Abbruchkriterium kann beispielsweise erfüllt sein, wenn die iterierte Wert-Funktion $\widehat{V}^{t+1}$ konvergiert ist, beispielsweise, dann, wenn eine Differenz zur vorherigen iterierten Wert-Funktion $\widehat{V}^t$ kleiner wird als ein zweiter Grenzwert $\Delta_2$, also $\|\widehat{V}^{t+1} - \widehat{V}^t\| < \Delta_2$. Das Abbruchkriterium kann auch als erfüllt gelten, wenn der Index t den vorgebbaren Zeithorizont T erreicht hat.

Ist das Abbruchkriterium nicht erfüllt, wird der Index t um eins erhöht (1570). Ist das Abbruchkriterium hingegen erfüllt, wird die Wert-Funktion V* gleich der iterierten Wert-Funktion $\widehat{V}^{t+1}$ der letzten Iteration gesetzt.

Damit endet dieser Teil des Verfahrens.

Figur 5 illustriert eine Ausführungsform des Verfahrens zum Ermitteln des Satzes B von Basisfunktionen für die tatsächliche iterierte Wert-Funktion $V^t$ der Bellmann-Gleichung. Hierzu wird zunächst (1600) der Satz B von Basisfunktionen als leere Menge initialisiert, ein Index I wird auf den Wert I=0 initialisiert. Eine auf den von dem Satz B von Basisfunktionen projizierte iterierte Wert-Funktion $\widehat{V}^{t,l}$ wird ebenfalls auf den Wert 0 initialisiert.

Dann (1610) wird eine Residuum $R^{t,l}(x) = |\widehat{V}^t(x) - \widehat{V}^{t,l}(x)|$ als Abweichung zwischen der iterierten Wert-Funktion $\widehat{V}^t$ und der entsprechend projizierten iterierten Wert-Funktion $\widehat{V}^{t,l}$ definiert.

Dann (1620) wird eine Maximalstelle $x_* = arg \max_s R^{t,l}(x)$ des Residuums ermittelt, z.B. mit einem Gradientenaufstiegsverfahren und es wird eine Hesse-Matrix $H^{t,l}$ des Residuums $R^{t,l}$ an der Maximalstelle $x_*$ ermittelt.

Nun (1630) wird eine dem Satz B von Basisfunktionen neu hinzuzufügende Basisfunktion $\phi_{l+1}^t$ ermittelt. Die neu hinzuzufügende Basisfunktion $\phi_{l+1}^t$ wird bevorzugt als eine Gaußfunktion mit Mittelwert $s_*$ und einer Kovarianzmatrix $\Sigma^*$ gewählt. Die Kovarianzmatrix $\Sigma^*$ wird dabei so berechnet, dass sie die Gleichung

$$\Sigma_*^{-1} = -R^{t,l}(x_*)^{(-2)} \nabla^T R^{t,l}(\mathrm{x})|_{\mathrm{x=x_*}} \ \nabla R^{t,l}(\mathrm{x})|_{\mathrm{x=x_*}} + R(x_*)^{-1} H^{t,l} \qquad (10)$$

erfüllt.

Dann (1640) wird diese hinzuzufügende Basisfunktion $\phi_{l+1}^t$ dem Satz B von Basisfunktionen hinzugefügt.

Nun (1650) wird die projizierte iterierte Wert -Funktion $\hat{V}^{t,l+1}$ durch Projektion der iterierten Wert -Funktion $\hat{V}^t$ auf den von dem nun erweiterten Satz B von Basisfunktionen aufgespannten Funktionenraum ermittelt.

Anschließend (1660) wird überprüft, ob die Ermittlung der projizierten iterierten Wert-Funktion $\hat{V}^{t,l+1}$ hinreichend konvergiert ist, beispielsweise, indem überprüft wird, ob eine zugehörige Norm (z.B. eine $L_\infty$-Norm) der Abweichung einen dritten vorgebbaren Grenzwert $\Delta_3$ unterschreitet, also $\|\hat{V}^{t,l+1} - \hat{V}^t\|_{L_\infty} < \Delta_3$.

Ist dies nicht der Fall, wird der Index I um eins inkrementiert, und das Verfahren verzweigt zurück zu Schritt 1610.

Andernfalls wird der ermittelte Satz $B = \left\{\phi_i^t\right\}_{i \le l+1}$ als gesuchter Satz von Basisfunktionen zurückgegeben, und dieser Teil des Verfahrens endet.

Figur 6 illustriert Ausführungsformen des Verfahrens zum Ermitteln der Stellgröße u. Figur 7a illustriert eine Ausführungsform für den Fall, dass die im Parameterspeicher 70 hinterlegten Parameter θ die Regelungsstrategie $\pi$ parametrieren. Hierzu wird zunächst (1700) eine Menge von Teststellen $x_i$ definiert, beispielsweise als ein Sobol-Plan (Englisch: "Sobol design plan").

Dann (1710) werden zu den Teststellen $x_i$ zugeordnete optimale Stellgrößen $u_i$ mittels der Formel

$$u_i = \mathrm{argmax}_{u \in U} \int p(x'|x_i, u) V^*(x') dx' \qquad (11)$$

z.B. mit einem Gradientenaufstiegsverfahren ermittelt und eine Trainingsmenge $M = \{(x_1, u_1), (x_2, u_2), ...\}$ aus Paaren der Teststellen $x_i$ mit den jeweils zugeordneten optimalen Stellgrößen $u_i$ erstellt.

Mit dieser Trainingsmenge M wird dann (1720) ein datenbasiertes Modell angelernt, beispielweise ein Gaußprozess $g_\theta$, sodass das datenbasierte Modell effizient zu einer Regelungsgröße x eine zugeordnete optimale Stellgröße u ermittelt. Die den Gaußprozess $g_\theta$ charakterisierenden Parameter $\theta$ werden im Parameterspeicher 70 hinterlegt.

Die Schritte (1700) bis (1720) laufen vorzugsweise im Lernsystem 40 ab.

Während des Betriebs des Aktorregelungssystems 45 ermittelt (1730) dieses dann mittels des Gaußprozess $g_\theta$ zu einer gegebenen Regelungsgröße x die zugehörige Stellgröße u.

Damit endet dieses Verfahren.

Figur 7b illustriert eine Ausführungsform für den Fall, dass die im Parameterspeicher 70 hinterlegten Parameter θ die Wert -Funktion V* parametrieren. Hierzu wird in Schritt (1800) zu einer gegebenen Regelungsgröße x analog zu Schritt (1710) mit einem Gradientenaufstiegsverfahren die zugehörige durch Gleichung

$$u = \mathrm{argmax}_u \int p(x'|x, u) V^*(x') dx'$$

definierte Stellgröße u ermittelt.

Damit endet dieses Verfahren.

## Patentansprüche

**1.** Verfahren zum Betreiben eines Lernsystems zum automatischen Einstellen von einer eine Regelungsstrategie ($\pi$) eines Aktorregelungssystems (45) charakterisierenden Größe (θ), wobei das Aktorregelungssystem (45) zum Regeln einer Regelungsgröße (x) eines Aktors (20) auf eine vorgebbare Sollgröße (x) eingerichtet ist und weiterhin eingerichtet ist, abhängig von der die Regelungsstrategie ($\pi$) charakterisierenden Größe (θ), eine Stellgröße (u) zu generieren und abhängig von dieser Stellgröße (u) den Aktor (20) anzusteuern,

wobei die die Regelungsstrategie ($\pi$) charakterisierende Größe (θ) abhängig von einer Wert -Funktion (V*) ermittelt wird,
wobei die Wert-Funktion (V*) iterativ ermittelt wird, indem die Wert-Funktion (V*) mittels einer Bellmann-Gleichung durch sukzessive Iterationen einer iterierten Wert-Funktion ($\hat{V}^t$) schrittweise angenähert wird,

wobei mittels der Bellmann-Gleichung aus einer iterierten Wert-Funktion ($\hat{V}^t$) einer vorhergehenden Iteration eine iterierte Wert-Funktion ($\hat{V}^{t+1}$) einer nachfolgenden Iteration ($\hat{V}^{t+1}$) ermittelt wird,
**dadurch gekennzeichnet, dass** zur Lösung der Bellmann-Gleichung an Stelle der iterierten Wert-Funktion ($\hat{V}^t$) der vorhergehenden Iteration nur ihre Projektion auf einen von einem Satz (B) von Basisfunktionen ($\phi_i^t$) aufgespannten Funktionenraum verwendet wird.

2. Verfahren nach Anspruch 1, wobei auch an Stelle der iterierten Wert-Funktion ($\hat{V}^{t+1}$) der nachfolgenden Iteration nur ihre Projektion auf einen von einem zweiten Satz (B) von Basisfunktionen ($\phi_i^{t+1}$) aufgespannten Funktionen-raum ermittelt wird.

3. Verfahren nach Anspruch 1 oder 2, wobei als Basisfunktionen ($\phi_i^{t+1}$) Gauß-Funktionen verwendet werden.

4. Verfahren nach einem der Ansprüche 1 bis 3, wobei ein Wert eines Integrals der Bellmann-Gleichung mittels numerischer Quadratur ermittelt wird.

5. Verfahren nach einem der Ansprüche 1 bis 4, wobei ein nachfolgender Satz (B) von Basisfunktionen ($\phi_i^{t+1}$) iterativ ermittelt wird, indem dem Satz (B) mindestens eine weitere Basisfunktion ($\phi_{l+1}^t$) abhängig davon hinzugefügt wird, wie groß ein maximales Residuum ($R^{k,l}$) zwischen der iterierten Wert-Funktion ($\hat{V}^t$) und ihrer Projektion auf den von diesem Satz (B) aufgespannten Funktionsraum ist.

6. Verfahren nach Anspruch 5, wobei die mindestens eine weitere Basisfunktion ($\phi_i^{t+1}$) abhängig von einer Maximalstelle ($x_*$) der Regelungsgröße (x), an der insbesondere die mindestens eine weitere Basisfunktion ($\phi_{l+1}^t$) ihren Maximalwert annimmt. gewählt wird, bei dem das Residuum ($R^{k,l}$) maximal wird.

7. Verfahren nach Anspruch 5 oder 6, wobei die mindestens eine weitere Basisfunktion ($\phi_{l+1}^t$) abhängig von einer eine Krümmung des Residuums ($R^{k,l}$) an der Maximalstelle ($x_*$) charakterisierenden Größe, insbesondere einer Hesse-Matrix ($H^{t,l}$) des Residuum ($R^{k,l}$) an der Maximalstelle ($x_*$), gewählt wird.

8. Verfahren nach Anspruch 7, wobei die mindestens eine weitere Basisfunktion ($\phi_{l+1}^t$) derart gewählt wird, dass an der Maximalstelle ($x_*$) ihre Hesse-Matrix gleich der Hesse-Matrix ($H^{t,l}$) des Residuum ($R^{k,l}$) ist.

9. Verfahren nach einem der Ansprüche 1 bis 8, wobei eine bedingte Wahrscheinlichkeit (p) von der die Bellmann-Gleichung abhängig ist, mittels eines Modells des Aktors (20), das insbesondere ein Gaußprozess (g) ist, ermittelt wird.

10. Verfahren nach Anspruch 8 oder 9, wobei nach erfolgter Ermittlung der die Regelungsstrategie (π) charakterisierenden Größe (θ) das Modell (g) abhängig von der Stellgröße (u), die bei einer Regelung des Aktors (20) mit dem Aktorregelungssystem (45) unter Berücksichtigung der Regelungsstrategie (π) dem Aktor (20) zugeführt wird, und der dann resultierenden Regelungsgröße (x) angepasst wird, wobei nach erfolgter Anpassung des Modells (g) die die Regelungsstrategie (π) charakterisierenden Größe (θ) erneut mit dem Verfahren nach Anspruch 9 ermittelt wird, wobei dann die bedingte Wahrscheinlichkeit (p) mittels des nun angepassten Modells (g) ermittelt wird.

11. Verfahren nach einem der Ansprüche 1 bis 10, wobei abhängig von der die Regelungsstrategie (π) charakterisierende Größe (θ) die Stellgröße (u) generiert wird und abhängig von dieser Stellgröße (u) der Aktor (20) angesteuert wird.

12. Computerprogramm, das eingerichtet ist, das Verfahren nach einem der Ansprüche 1 bis 11 auszuführen.

13. Maschinenlesbares Speichermedium (42), auf dem das Computerprogramm nach Anspruch 12 gespeichert ist.

14. Lernsystem (40) zum automatischen Einstellen einer eine Regelungsstrategie (π) eines Aktorregelungssystems (45) charakterisierenden Größe (θ), welches zum Regeln einer Regelungsgröße (x) eines Aktors (20) auf eine vorgebbare Sollgröße (xd) eingerichtet ist, wobei das Lernsystem (40) eingerichtet ist, das Verfahren nach einem der Ansprüche 1 bis 10 auszuführen.

**Claims**

1. Method for operating a learning system for automatically setting a variable ($\theta$) characterizing a control policy ($\pi$) of an actuator regulation system (45) wherein the actuator regulation system (45) is set up for regulating a regulation variable (x) of an actuator (20) to a pre-definable target variable (x), the actuator regulation system (45) being set up to generate a correcting variable (u) as a function of a variable ($\theta$) characterizing a control policy ($\pi$) and to control the actuator (20) as a function of this correcting variable (u),

   wherein the variable ($\theta$) characterizing the control policy ($\pi$) is determined as a function of a value function ($V^*$).
   wherein the value function ($V^*$) is determined iteratively by gradually approximating the value function ($V^*$) by means of a Bellmann equation by successive iterations of an iterated value function ($\hat{V}^t$),
   wherein an iterated value function ($\hat{V}^t$) of a subsequent iteration ($\hat{V}^{t+1}$) is determined by means of the Bellmann equation from an iterated value function ($\hat{V}^{t+1}$) of a previous iteration,
   **characterized in that**
   for the solution of the Bellmann equation, instead of the iterated value function ($\hat{V}^t$) of the previous iteration, only its projection onto a functions space spanned by a set (B) of basic functions $\left(\phi_i^t\right)$ is used.

2. Method according to claim 2, wherein also instead of the iterated value function ($\hat{V}^{t+1}$) of the subsequent iteration only its projection onto a functions space spanned by a second set (B) of basic functions $\left(\phi_i^{t+1}\right)$ is determined.

3. Method according to claim 2 or 3, wherein Gaussian functions are used as basic functions $\left(\phi_i^{t+1}\right)$.

4. Method according to any of claims 1 to 3, wherein a value of an integral of the Bellmann equation is determined by numerical quadrature.

5. Method according to any of claims 1 to 4, wherein a subsequent set (B) of basic functions $\left(\phi_i^{t+1}\right)$ is determined iteratively by adding at least one further basic function $\left(\phi_{i+1}^t\right)$ to the set (B) depending on how large a maximum residuum ($R^{k,l}$) is between the iterated value function ($\hat{V}^t$) and its projection onto the function space spanned by this set (B).

6. Method according to claim 5, wherein the at least one further basic function $\left(\phi_i^{t+1}\right)$ is selected depending on a maximum point ($x_*$) of the regulation variable (x) at which the at least one additional basic function $\left(\phi_{i+1}^t\right)$ assumes its maximum value at a maximum point ($x_*$) and at which the residuum ($R^{k,l}$) becomes maximum.

7. Method according to claim 5 or 6, wherein the at least one additional basic function $\left(\phi_{i+1}^t\right)$ is selected depending on a variable characterizing a curvature of the residuum ($R^{k,l}$) at the maximum point ($x_*$), in particular a Hesse matrix ($H^{t,l}$) of the residuum ($R^{k,l}$) at the maximum point ($x_*$).

8. Method according to claim 7, wherein the at least one additional basic function $\left(\phi_{i+1}^t\right)$ is selected in such a manner that at the maximum point ($x_*$) its Hesse matrix is equal to the Hesse matrix ($H^{t,l}$) of the residuum ($R^{k,l}$).

9. Method according to any of claims 1 to 8, wherein a conditional probability (p) on which the Bellmann equation depends is determined by means of a model of the actuator (20), which particularly is a Gaussian process (g).

10. Method according to claim 8 or 9, wherein, after the determination of the variable ($\theta$) characterizing the control policy ($\pi$), the model (g) is adapted as a function of the correcting variable (u), which is fed to the actuator (20) during a regulation of the actuator (20) with the actuator regulation system (45) taking into account the control policy ($\pi$), and the then resulting regulation variable (x), wherein after completion of the adaptation of the model (g) the variable ($\theta$) characterizing the control policy ($\pi$) is determined again by the method according to claim 9, wherein the conditional probability (p) is then determined by means of the now adapted model (g).

11. Method according to any of claims 1 to 10, wherein the correcting variable (u) is generated as a function of the variable ($\theta$) characterizing the control policy ($\pi$) and the actuator (20) is controlled as a function of this correcting variable (u).

**12.** Computer program set up to carry out the method according to any of claims 1 to 11.

**13.** A machine-readable storage medium (42) storing the computer program according to claim 12.

**14.** Learning system (40) for automatically setting a variable (θ) characterizing a control policy (π) of an actuator regulation system (45), which is set up for regulating a regulation variable (x) of an actuator (20) to a pre-definable target variable (xd), wherein the learning system (40) is set up to execute the method according to any of claims 1 to 10.

**Revendications**

**1.** Procédé permettant de faire fonctionner un système d'apprentissage destiné au réglage automatique d'une grandeur (θ) caractérisant une stratégie de régulation (n) d'un système de régulation d'actionneur (45), le système de régulation d'actionneur (45) étant établi sur une grandeur de consigne prédéfinissable (x) pour la régulation d'une grandeur de régulation (x) d'un actionneur (20), et étant en outre établi pour générer en fonction de la grandeur (θ) caractérisant la stratégie de régulation (n) une grandeur de réglage (u) et pour piloter l'actionneur (20) en fonction de cette grandeur de réglage (u),

la grandeur (θ) caractérisant la stratégie de régulation (n) étant déterminée en fonction d'une fonction de valeur (V*),
la fonction de valeur (V*) étant déterminée de manière itérative en ce que la fonction de valeur (V*) est ajustée progressivement au moyen d'une équation de Bellman par des itérations successives d'une fonction de valeur itérée ($\hat{V}^t$),
l'équation de Bellman permettant de déterminer à partir d'une fonction de valeur itérée ($\hat{V}^t$) d'une itération précédente une fonction de valeur itérée ($\hat{V}^{t+1}$) d'une itération suivante ($\hat{V}^{t+1}$),
**caractérisé en ce que** pour résoudre l'équation de Bellman, au lieu de la fonction de valeur itérée ($\hat{V}^t$) de l'itération précédente, on n'utilise que sa projection sur un espace fonctionnel formé par un ensemble (B) de fonctions de base

$$(\phi_i^t).$$

**2.** Procédé selon la revendication 1, dans lequel, également au lieu de la fonction de valeur itérée ($\hat{V}^{t+1}$) de l'itération suivante, on ne détermine que sa projection sur un espace fonctionnel formé par un deuxième ensemble (B) de fonctions de base $(\phi_i^{t+1})$.

**3.** Procédé selon la revendication 1 ou 2, dans lequel des fonctions de Gauss sont utilisées comme fonctions de base $(\phi_i^{t+1})$.

**4.** Procédé selon l'une quelconque des revendications 1 à 3, dans lequel une valeur d'une intégrale de l'équation de Bellman est déterminée au moyen d'une quadrature numérique.

**5.** Procédé selon l'une quelconque des revendications 1 à 4, dans lequel un ensemble suivant (B) de fonctions de base $(\phi_i^{t+1})$ est déterminé itérativement en ce qu'au moins une autre fonction de base $(\phi_{i+1}^t)$ est ajoutée à l'ensemble (B) en fonction de la quantité d'un résidu maximal ($R^{k,l}$) entre la fonction de valeur itérée ($\hat{V}^t$) et sa projection sur un espace fonctionnel formé par cet ensemble (B).

**6.** Procédé selon la revendication 5, dans lequel ladite au moins une autre fonction de base $(\phi_i^{t+1})$ est sélectionnée en fonction d'une position maximale (x∗) de la grandeur de régulation (x) dans laquelle en particulier ladite au moins une autre fonction de base $(\phi_{i+1}^t)$ adopte sa valeur maximale pour laquelle le résidu ($R^{k,l}$) sera maximal.

**7.** Procédé selon la revendication 5 ou 6, dans lequel ladite au moins une autre fonction de base $(\phi_{i+1}^t)$ est sélec-

tionnée en fonction d'une grandeur caractérisant une courbure du résidu ($R^{k,l}$)à la position maximale (x∗), en particulier d'une matrice hessienne ($H^{t,l}$) du résidu ($R^{k,l}$) à la position maximale (x∗).

8. Procédé selon la revendication 7, dans lequel ladite au moins une autre fonction de base $\left(\phi_{l+1}^{t}\right)$ est sélectionnée de telle sorte qu'à la position maximale (x∗) la matrice hessienne de celle-ci est égale à la matrice hessienne ($H^{t,l}$) du résidu ($R^{k,l}$).

9. Procédé selon l'une quelconque des revendications 1 à 8, dans lequel une probabilité conditionnelle (p) dont dépend l'équation de Bellman est déterminée au moyen d'un modèle de l'actionneur (20) qui est en particulier un processus de Gauss (g).

10. Procédé selon la revendication 8 ou 9, dans lequel, lorsque la détermination de la grandeur (θ) caractérisant la stratégie de régulation (n) a été effectuée, le modèle (g) est adapté en fonction de la grandeur de réglage (u) qui est amenée à l'actionneur (20) lors d'une régulation de l'actionneur (20) par le système de régulation d'actionneur (45) en tenant compte de la stratégie de régulation (π), et de la grandeur de régulation (x) qui en résulte, dans lequel, après que l'adaptation du modèle (g) a été effectuée, la grandeur (θ) caractérisant la stratégie de régulation (n) est à nouveau déterminée par le procédé selon la revendication 9, dans lequel ensuite la probabilité conditionnelle (p) est déterminée au moyen du modèle (g) à présent adapté.

11. Procédé selon l'une quelconque des revendications 1 à 10, dans lequel, en fonction de la grandeur (θ) caractérisant la stratégie de régulation (π), la grandeur de réglage (u) est générée et l'actionneur (20) est piloté en fonction de cette grandeur de réglage (u).

12. Programme informatique qui est établi pour exécuter le procédé selon l'une quelconque des revendications 1 à 11.

13. Support de stockage (42) lisible par machine sur lequel est stocké le programme informatique selon la revendication 12.

14. Système d'apprentissage (40) permettant le réglage automatique d'une grandeur (θ) caractérisant une stratégie de régulation (n) d'un système de régulation d'actionneur (45) qui est établi pour réguler une grandeur de régulation (x) d'un actionner (20) sur une grandeur de consigne prédéfinissable (xd), le système d'apprentissage (40) étant établi pour exécuter le procédé selon l'une quelconque des revendications 1 à 10.

Fig. 1

Fig. 2

Fig. 3

Fig. 4

Fig. 5

a)

```
1700 → 1710 → 1720 → 1730
```

b)

```
1800
```

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017211209
- EP 2112569 A2
- US 6208981 B1